(19) **Europäisches Patentamt**
**European Patent Office**
**Office européen des brevets**

(11) **EP 2 817 677 B1**

(12) **FASCICULE DE BREVET EUROPEEN**

(45) Date de publication et mention
de la délivrance du brevet:
**15.06.2016 Bulletin 2016/24**

(21) Numéro de dépôt: **13705993.7**

(22) Date de dépôt: **22.02.2013**

(51) Int Cl.:
*G03B 15/06* (2006.01)    *G06K 9/00* (2006.01)
*H04N 5/232* (2006.01)    *H04N 5/235* (2006.01)
*G06K 9/03* (2006.01)    *G03B 17/53* (2006.01)
*G03B 15/05* (2006.01)

(86) Numéro de dépôt international:
**PCT/EP2013/053598**

(87) Numéro de publication internationale:
**WO 2013/124437 (29.08.2013 Gazette 2013/35)**

(54) **STATION D'ACQUISITION DE DONNÉES BIOMÉTRIQUES ET BIOGRAPHIQUES**

ANLAGE FÜR DEN ERWERB VON BIOMETRISCHEN UND BIOGRAPHISCHEN DATEN

STATION FOR ACQUIRING BIOMETRIC AND BIOGRAPHIC DATA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.02.2012 FR 1200529**

(43) Date de publication de la demande:
**31.12.2014 Bulletin 2015/01**

(73) Titulaire: **THALES**
**92400 Courbevoie (FR)**

(72) Inventeurs:
• **COHEN, Marc**
**F-78141 Velizy Cedex (FR)**
• **RUSSEL, Frédéric**
**F-78141 Vélizy Cedex (FR)**
• **LE GROUYER, Jérôme**
**F-78141 Vélizy Cedex (FR)**
• **FOUCAL, Nicolas**
**F-78141 Vélizy Cedex (FR)**

• **MARTI, Sandra**
**F-78141 Vélizy Cedex (FR)**
• **BELARDI, Stéphane**
**F-78141 Vélizy Cedex (FR)**
• **BRUNOLD, Séverine**
**F-78141 Vélizy Cedex (FR)**
• **WEBER, Julien**
**F-78141 Vélizy Cedex (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A1-2010/099356    DE-A1-102006 046 395**
**KR-A- 20060 099 310    US-A1- 2009 080 708**
**US-A1- 2010 308 108**

**Description**

L'objet concerne une station ou dispositif permettant d'acquérir des données biométriques et biographiques, par exemple des données personnelles, notamment pour établir un titre officiel d'identité.

L'invention est utilisée, par exemple pour établir un passeport biométrique et/ou pour contrôler les informations d'un passeport.

La plupart des Etats ont pour objectif de déployer des solutions d'acquisition de données biométriques à l'échelle de leur pays. Ces solutions doivent permettre la saisie de données de type état civil, l'acquisition d'empreintes digitales et la prise de photos.

La problématique posée par ces stations est, notamment, d'être faciles à installer, d'être efficaces en termes de nombre de personnes enrôlées par heure, d'être ergonomiques vis-à-vis du citoyen qui vient se faire enrôler, d'effectuer l'acquisition d'empreintes de bonne qualité, de prendre des photos conformes aux recommandations requises dans ce domaine.

Les solutions proposées et connues du Demandeur nécessitent plusieurs acquisitions des mêmes empreintes pour avoir un niveau de qualité suffisant et plusieurs acquisitions de photos pour obtenir une photo conforme aux recommandations précitées.

Les stations actuellement proposées ne donnent pas d'information au citoyen qui se fait enrôler, l'opérateur guide oralement le citoyen. Ceci peut conduire à des mouvements erronés du citoyen. Celui-ci peut en effet ne pas comprendre comment poser les doigts sur le capteur d'empreintes, bouger les doigts pendant la capture, ou retirer les doigts avant la fin de la capture, ce qui conduit à des acquisitions d'informations erronées ou à une perte de temps. En termes d'acquisition de la photo, après la prise de photo, le citoyen demandant à voir sa photo, se déplace pour regarder sur l'écran de l'opérateur la prise de vue. Si celle-ci ne lui convient pas, il va retourner à sa place pour une autre prise. Dans son déplacement, il peut ne pas se repositionner exactement dans la même position, dans ce cas les réglages précédents ne sont plus pertinents, ce qui peut conduire à un grand nombre de prise de photos.

Le document US 2009/080708 divulgue un système permettant l'acquisition de données biométriques et biographiques qui n'est pas équipé de moyens d'éclairage montés sur un portique afin de réaliser une photographie avec une qualité maximum.

Dans la suite de la description on utilise le mot « Demandeur » pour désigner une personne qui souhaite obtenir un document d'identité, et le mot « opérateur », la personne chargée de l'établissement de ce titre.

Un des objectifs de la présente demande de brevet est d'offrir un système permettant une acquisition rapide des données biométriques, et de photos afin d'établir une carte d'identité ou un passeport biométrique en respectant des conditions requises par un Etat.

L'invention concerne un système permettant l'acquisition de données biométriques et biographiques d'un individu selon la revendication independante 1.

Les moyens d'éclairage sont, par exemple, adaptés pour garantir une acquisition de photos conformes aux contraintes de qualités relatives à la norme ICAO 9303 et ISO 19794-5.

Le système peut comporter des moyens de transmission sécurisée adaptés à l'envoi des données biographiques et biométriques acquises de manières anonymes et décorrélées entre le microordinateur et un réseau N

Selon une variante de réalisation, le microordinateur comprend un processeur adapté à exécuter au moins les modules applicatifs suivant :

- un module pour acquérir les données biographiques d'un demandeur,
- un module d'acquisition de données biométriques d'un demandeur, d'une photographie, d'empreintes,
- le module d'acquisition d'une photographie étant adapté à afficher une photographie sur l'écran de retour, et à proposer à l'individu de cadrer son visage, de se positionner par rapport à la caméra, et à avertir l'individu que l'acquisition de sa photographie est en cours, puis à vérifier la qualité de la photographie et à valider la photographie dans le cas où la qualité de la photographie est acceptable,
- un module d'acquisition et de contrôle de qualité de la prise d'empreintes, adapté à contrôler le lien entre une empreinte effectuée et un doigt, à contrôler en temps réel et en continue la qualité des images acquises pour chacun des doigts et à sélectionner en temps réel la meilleur image obtenue pour un doigt.

Le système peut comporter un moyen adapté à contrôler la qualité de la prise d'empreintes, ledit moyen étant adapté à afficher sur l'écran de retour une échelle de couleur en fonction de la qualité de la prise d'empreintes.

La caméra est intégrée dans le bâti, avec des capacités de réglage de la prise de vue externalisées, accessible depuis l'extérieur.

Le bâti comporte, par exemple, une partie horizontale et une partie verticale et

- Le capteur d'empreinte est intégré dans la partie horizontale du bati, en proximité du bord du bati,

- La caméra, est intégrée dans la partie verticale du bati, à hauteur moyenne des yeux d'un individu en position assise,
- L'écran de retour est intégré dans la partie verticale du bati, face à l'individu, en dessous de la caméra et au dessus du capteur de prise d'empreintes.

L'invention selon la revendication independante 8, concerne aussi l'utilisation du système selon les revendications 1-6 pour collecter l'ensemble des données biométriques et biographiques conformes à l'établissement de documents sécurisés, tels qu'une carte d'identité, un passeport, un permis de conduire.

D'autres caractéristiques et avantages du dispositif selon l'invention apparaîtront mieux à la lecture de la description qui suit d'un exemple de réalisation donné à titre illustratif et nullement limitatif annexé des figures qui représentent :

- La figure 1A et la figure 1B, un schéma représentant la station de prise d'empreintes et de photographie, la figure 1C un exemple d'architecture,
- La figure 2A, un schéma indiquant les conditions d'éclairage les mieux adaptées à la prise d'une photographie, la figure 2B, un détail du schéma d'éclairage,
- La figure 3, un schéma comprenant les principales étapes mises en oeuvre dans l'invention,
- La figure 4, une représentation des états,
- La figure 5, une représentation d'un écran d'acquisition des données,
- La figure 6, un schéma de la saisie des données,
- La figure 7, un exemple d'écran d'affichage de la prise de photos,
- La figure 8, une représentation d'un écran d'affichage lors de l'acquisition des empreintes,
- La figure 9, un écran opérateur lors de l'acquisition des empreintes, et
- La figure 10, un écran lors de l'impression d'un récépissé.

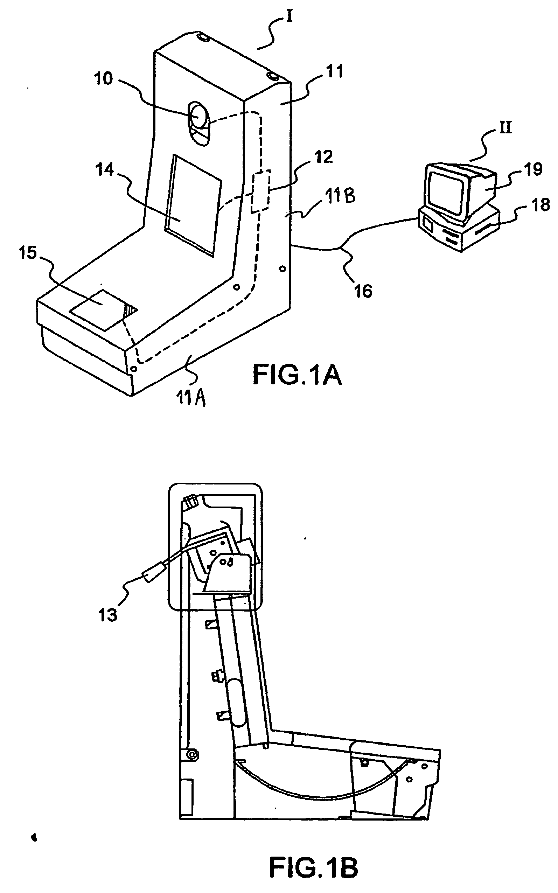

La figure 1A représente un exemple de réalisation d'une station 1 d'acquisition des données permettant permettant d'acquérir des données biométriques et biographiques d'un individu. La station est, par exemple, composée d'un bâti 11 comprenant une partie horizontale 11 A et une partie verticale 11 B. Le système est par exemple composé d'une première partie I « acquisition de données » composée d'un moyen de prise d'images tel qu'une caméra 10 solidaire du bâti 11 comprenant des moyens de connectique 12 permettant de relier les différents éléments (capteur d'empreinte, écran de retour, caméra) à la deuxième partie II de traitement de données. La caméra est en liaison via la connectique 12 et un câble 16, avec un microordinateur 19, tel qu'un PC de bureau avec son interface homme machine (écran, clavier). Elle comporte, par exemple, un PC équipé d'un processeur permettant aux différents logiciels mis en oeuvre dans la présente invention d'être exécutés. La caméra 10 est intégrée dans le bâti. L'axe de la caméra est, par exemple, relié à un moyen 13 ou levier de manipulation qui permet à un opérateur de trouver la meilleure position pour la prise d'images sans avoir à faire bouger le sujet ou individu. La station comprend un écran de retour 14 adapté à permettre à un individu de connaître les étapes qu'il doit suivre durant l'acquisition des informations nécessaires pour établir son identité. L'écran de retour 14 est situé, par exemple, au milieu de la partie verticale de la station et au-dessous de la caméra. La station comporte un capteur de prise d'empreintes 15.

Par exemple, des animations simples sur l'écran de retour permettent de montrer la position des mains à respecter, le placement du visage dans un repère donné, l'image résultant de l'acquisition des données ou de l'image prise par la caméra, l'image résultant de l'acquisition des empreintes lorsque l'utilisateur appose ses doigts sur le capteur 15 de prise d'empreintes positionné sur la partie horizontale 11 A du bâti 11, de montrer à l'utilisateur la mesure de la qualité associée à l'acquisition des empreintes, et de fait guider l'utilisateur pour trouver la bonne position, la pression correcte avec laquelle il doit appliquer ses doigts afin d'obtenir la qualité au niveau de la prise d'empreintes. Cet écran de retour permet aussi d'indiquer à l'utilisateur la fin d'acquisition des données. La caméra pourrait aussi être un appareil photo numérique.

L'agencement de ces différents éléments, au moins la caméra 10, l'écran 14, le capteur d'empreintes 15 est, par exemple, adapté à permettre à l'individu la lecture directe des informations et consignes affichées en temps réel sur l'écran de retour durant la phase de capture des empreintes de l'individu, ainsi que durant l'acquisition de la photo de l'individu. Pour cela les éléments sont par exemple disposés de la manière suivante :

- Le capteur d'empreinte 15 est intégré dans la partie horizontale 11A du bati 11, en proximité du bord du bati, pour favoriser, par exemple, l'accès depuis une position assise ;
- Le dispositif de prise d'image, ou caméra 10, est intégré dans la partie verticale 11 B du bati 11, à hauteur moyenne des yeux d'un individu en position assise, par exemple ;
- L'écran de retour 14 est intégré dans la partie verticale 11 B du bati 11, face à l'individu, en dessous du dispositif de prise d'image et au dessus du capteur de prise d'empreintes 15.

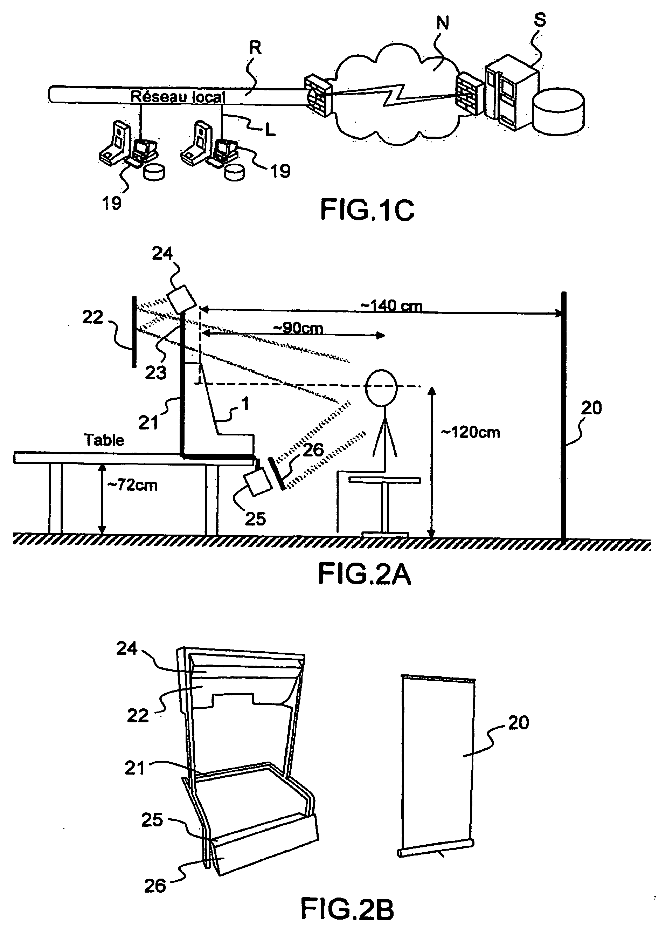

Le PC comprend une mémoire de travail ou mémoire vive ayant une capacité suffisante pour le traitement des données captées, ces données n'étant pas enregistrées en fonctionnement normal du système. C'est-à-dire qu'en cas de coupure d'alimentation, les données ne sont pas sauvegardées. Le PC 19 est équipé d'un lecteur de carte 18, permettant de vérifier l'authentification de l'opérateur. Les données traitées sont ensuite transmises par des moyens de communication sécurisés vers un site de traitement. Les algorithmes de transmission sécurisée des données sont des algorithmes permettant leur transmission en toute sécurité, c'est-à-dire qu'un observateur extérieur ne peut reconstruire le contenu des données transmises. La figure 1C schématise un exemple d'architecture dans laquelle plusieurs stations d'acquisitions de données selon l'invention sont reliées à un réseau local R, par des liaisons L, le réseau local est en liaison avec un réseau N qui va diriger les données vers un système national N. Les moyens de transmission sécurisée sont adaptés à l'envoi des données biographiques et biométriques acquises de manière anonyme et décorrélées entre le microordinateur 19 et le réseau N selon des techniques connues de l'Homme du métier.

Le PC est, par exemple, relié à un scanner à plat, une imprimante laser, un clavier multi fonctions intégrant lecteur carte à puce contact et lecteur MRZ, un lecteur puce sans contact RFID et contact, une imprimante pour le passeport une fois les données biométriques et bibliographiques acquises et validées par l'opérateur.

Le capteur de détection d'empreintes 15 est par exemple choisi pour assurer à la fois l'enrôlement et la vérification des empreintes.

L'écran de retour 14 a notamment pour fonction de guider le Demandeur d'un titre d'identité. Il permet d'afficher des informations lors de la capture des empreintes et de la photo, d'aider le Demandeur à bien se positionner face à la caméra ou de bien placer ses doigts sur le capteur. Il permet également d'afficher les informations état civil saisies pour vérification par le Demandeur. L'écran de retour permet d'associer de manière interactive le Demandeur au processus d'acquisition. Il offre, au Demandeur, le cas échéant, la possibilité de demander une nouvelle prise de photo pour trouver la position, l'angle, l'éclairage qui le mettra le plus en valeur

Les figures 2A et 2B schématisent un exemple de système d'éclairage ayant pour objectif l'obtention d'une qualité d'image obtenue par la caméra, plus particulièrement une qualité au niveau de la luminosité. Cette qualité peut notamment être obtenue en agençant la console d'acquisition des données, par rapport à un système d'éclairage et un fond 20.

Le système d'éclairage selon l'invention comprend, par exemple, un portique 21 sur lequel est disposée la console d'acquisition des données 1. Un système d'éclairage par réflexion et diffusion composé d'un réflecteur métallique courbe 22 est fixé à l'arrière et au sommet 23 du portique. Un premier tube lumineux 24 supérieur placé sensiblement horizontalement muni d'une protection entièrement transparente est abaissé et orienté vers le réflecteur. Un deuxième tube lumineux 25 est disposé sensiblement horizontalement dans la partie inférieure du bâti. La puissance lumineuse $P_2$ du second tube d'éclairage est inférieure à celle $P_1$ du premier tube. Le deuxième tube est par exemple équipé d'un capot de diffusion 26. Les deux tubes sont positionnés par exemple à l'horizontale, pour éviter les reflets dans les lunettes des utilisateurs par exemple. Les deux tubes permettent notamment d'éclairer le visage sous le menton et au-dessus du front de l'utilisateur, permettant ainsi d'éviter les ombres créées par l'usage d'une seule source. La puissance totale d'éclairage est notamment choisie pour annuler d'éventuelles interférences dues à l'éclairage ambiant. Les moyens d'éclairage sont notamment adaptés afin de garantir une acquisition de photos conformes aux contraintes de qualité relatives à la norme sur les documents de voyage ICAO 9303 et ISO 19794-5, tels que l'absence d'ombre et de spots ou « hot spots » sur le visage, l'aspect naturel des couleurs, etc.

Un exemple de description fonctionnelle du système selon l'invention est, par exemple, la suivante.

Le logiciel chargé au niveau du microprocesseur et exécuté par le système selon l'invention est adapté à charger et exécuter les modules applicatifs listés ci-après :

_ **Recueil de la demande,** ce module concerne l'acquisition de toutes les données constituant la demande de passeport.

_ **Enrôlement biométrique,** dans le cas où l'acquisition des données biométriques (photo et empreintes) s'effectue sur un poste dédié, un module n'effectuant que ces opérations doit être disponible.

_ **Validation,** la validation est l'acte qui implique l'agent qui va émettre la demande de passeport.

_ **Instruction de la demande,** est effectuée au niveau de la préfecture, l'instruction permet la vérification de tous les documents avant d'avaliser ou de refuser la production du titre.

_ **Remise du titre,** une fois produit et convoyé vers le guichet de délivrance, le titre est remis au Demandeur.

_ **Délivrance d'un passeport temporaire.** Elle est effectuée en préfecture, cet acte requiert le formatage des données du Client demandeur pour l'impression

_ **Gestion des évènements,** la déclaration de perte, de vol, annulation d'une demande ou d'un titre

_ **Consultations,** les utilisateurs du système doivent pouvoir avoir accès à tout ou partie des informations les concernant.

Le recueil de la demande de passeport constitue le module principal. Il concerne l'ensemble du processus de demande, de l'initialisation jusqu'au moment où le dossier est complet (tous les documents ont été acquis). Tous les types de demandes peuvent être gérés par ce module. Il comprend l'acquisition de l'état civil, de la photo, des empreintes, de la signature, des pièces justificatives. Il permet également de lire la puce du passeport lors d'un renouvellement afin d'accélérer la capture de la demande mais également d'authentifier le porteur par une comparaison empreinte. Le logiciel du dispositif de recueil est un cas particulier du recueil de la demande où seule l'acquisition des données biométriques du client citoyen est effectuée : photo, et empreintes digitales.

**Description du fonctionnement du système**

Avant démarrage de l'ordinateur, l'opérateur va insérer sa carte d'identification agent dans le lecteur dédié 16 relié à l'ordinateur 19. Le logiciel va s'initialiser puis une fenêtre de saisie de code PIN de la carte agent apparaît. L'opérateur va alors saisir le code PIN associé à sa carte et le valider à l'aide du bouton OK de la fenêtre.

Le logiciel de l'ordinateur ou PC comporte plusieurs modules et fonctionnalités.

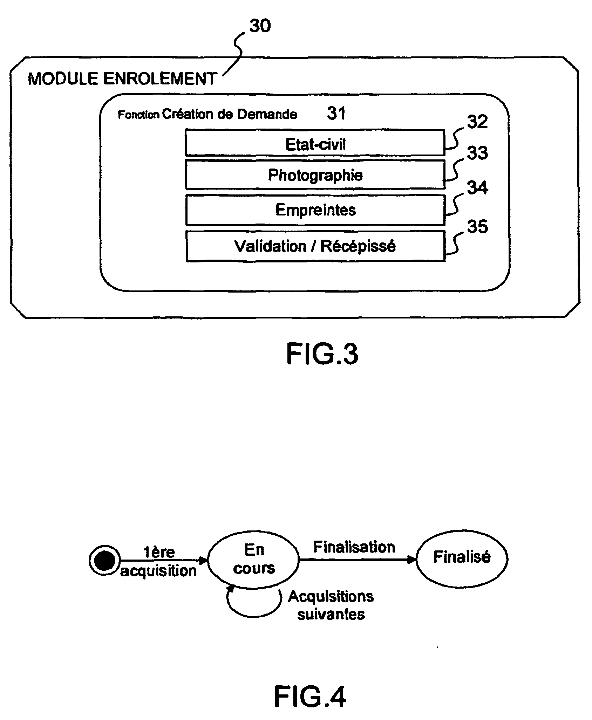

Un module d'enrôlement (figure 3) possède une fonctionnalité qui est la création de demande de document d'identité. La figure 3 représente les fonctionnalités de ce module 30. La fonction 31 Création de Demande va faire appel à de nombreux écrans. Chacun de ces écrans est dédié à l'acquisition des différents types de données, biométriques ou biographiques. La séquence par défaut de l'enchainement des écrans est gérée par configuration du système. La fonction « Création de Demande » correspond à une capture de données, ou fonction « Capturer les données » à partir d'une demande créée au préalable. Dans le contexte de l'exemple donné pour illustrer la présente invention, les enchaînements d'écrans sont par exemple: Etat-civil 32, photographie 33, empreintes 34, finalisation 35.

L'évolution de la demande en établissement d'une pièce d'identité est suivie grâce à son état schématisé par exemple à la figure 4. Il y a 2 états de demande dans le système représentés à la figure 4 : « En cours », la demande est créée, et « Finalisée », aucune modification des données acquises n'est alors possible. Avant l'état « En cours », aucune information n'est sauvegardée dans le système.

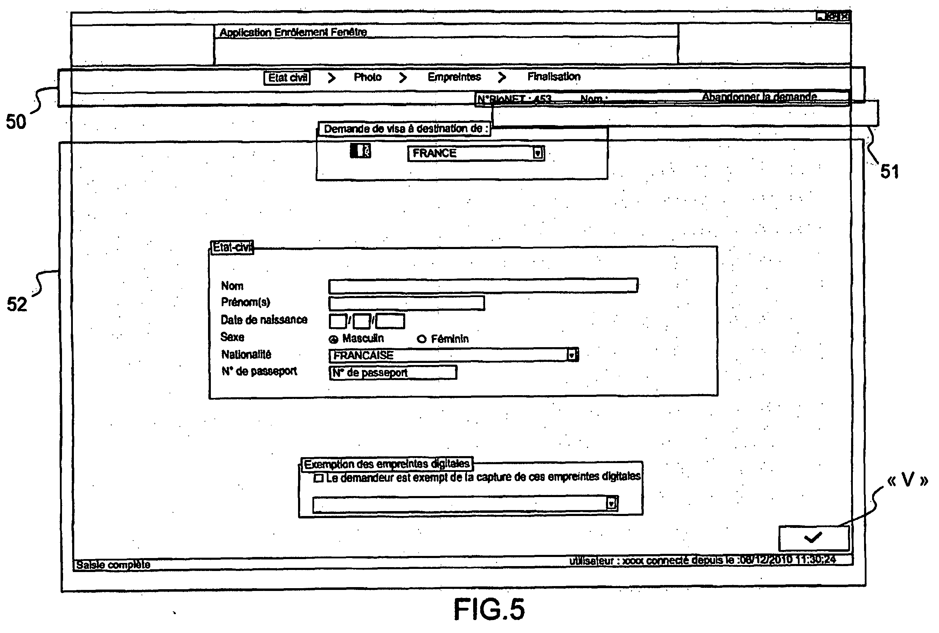

La figure 5 schématise une représentation de l'écran d'acquisition des données. Cet écran est composé de plusieurs parties ; la barre d'outils 50, la barre 51 d'information d'acquisition sous la barre d'acquisition, et la zone 52 de capture au centre. La barre d'acquisition reste affichée tant que le processus d'acquisitions des données n'est pas terminé.

Elle montre les différentes étapes d'acquisition configurées pour l'application, et l'ordre d'acquisition : l'acquisition s'effectue toujours de gauche à droite de façon linéaire.

L'étape d'acquisition en cours se démarque des autres par un surlignage coloré orange de l'onglet.

Les étapes d'acquisition de la barre de travail peuvent recevoir un marquage particulier :

« V » signifie que des données ont été correctement capturées.

La barre d'information de l'acquisition reste affichée tant que le processus d'acquisitions des données n'est pas terminé. Elle affiche des informations de base sur la demande de création de documents d'identité :

•  le n° de la demande,
•  le nom du demandeur.

Elle donne de plus accès à la fonction d'abandon de demande, via le bouton « Abandonner la demande ».

La fonction saisie de l'état civil va autoriser l'opérateur à capturer les données bibliographiques du demandeur.

A partir de l'écran principal, l'opérateur va sélectionner [enrôlement] [saisie complète], puis va cliquer sur le bouton correspondant dans la barre d'outils.

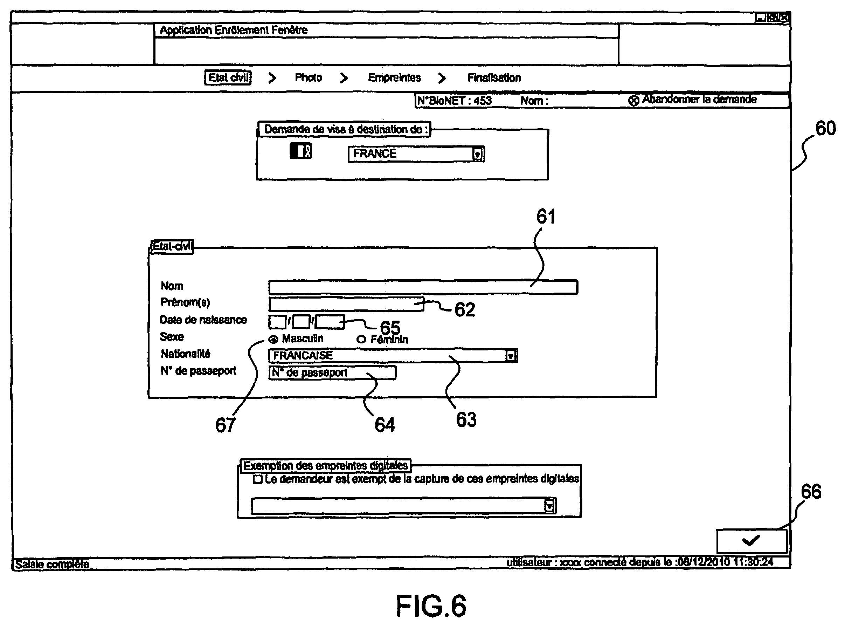

Une fois que l'opérateur a lancé la fonction, l'écran 60 de saisie des données d'état-civil apparaît (figure 6). Une fois que cet écran est chargé, l'opérateur peut démarrer la saisie de l'état-civil du Demandeur. La saisie de l'état-civil peut s'effectuer :

•  soit par la lecture de la bande MRZ du passeport,
•  soit manuellement par l'opérateur.

Après une lecture de l'état-civil avec un lecteur MRZ, il n'est pas possible de modifier les données lues, mais il est possible d'en compléter certains. Dans une bande MRZ, il se peut que le nom ou le prénom soient tronqués. Dans ce cas, l'opérateur a la possibilité de compléter ces champs, tels qu'ils apparaissent sur le passeport.

Les champs 61, 62 « Nom et Prénom(s) » ont une *longueur fixe.* Cela signifie que le nombre de caractères est limité. Le champ Nom 61 est limité à 50 caractères. Le champ Prénom(s) 62 est limité à 25 caractères Si le lecteur MRZ est indisponible, l'opérateur doit saisir manuellement les données d'état-civil du demandeur.

Les données à saisir sont par exemple:

- le nom,
- le(les) prénom(s),
- la date de naissance,
- le sexe,
- la nationalité,
- le n° de passeport.

Une possibilité de procédure pas à pas est par exemple la suivante :

Nom ; Entrer le nom tel qu'il apparaît dans le champ passeport correspondant. Le nom est automatiquement en majuscule.
Prénom(s) : Entre le(les) prénom(s) en majuscule tel qu'il(s) apparaît (ssent) dans le champ passeport correspondant. Le prénom est automatiquement en majuscule.
Date de naissance 65; Entrer le champ tel qu'il apparaît dans le champ passeport correspondant. Entrer le jour de naissance dans la case « JJ », le mois de naissance dans la case « MM » et l'année de naissance dans la case « AAAA ».

La date de naissance peut être incomplète. Il est possible de rentrer :

- une date complète (jour, mois et année connus),
- une date dont le jour est inconnu,
- une date dont le jour et le mois sont inconnus.

Sélectionner 67 « masculin » ou « féminin » selon la valeur inscrite sur le passeport. Les valeurs possibles sont :

- F pour « féminin »,

    M pour « masculin ».

Entrer la nationalité telle qu'elle apparaît dans le champ passeport correspondant.
Il y a, par exemple, deux façons de choisir la nationalité 63:

L'opérateur sélectionne la nationalité via la liste déroulante
L'opérateur commence à taper les premières lettres de la nationalité, puis sélectionne la nationalité à l'aide des flèches haut/bas, et enfin valide la sélection en appuyant sur la touche Entrée.

Entrer le numéro du passeport, 64, tel qu'il apparaît dans le champ passeport correspondant.

**Exemption des empreintes digitales**

La saisie des données d'état-civil du demandeur prévoit d'indiquer si le demandeur est exempté de l'acquisition de ses empreintes digitales ou pas 65.

**Validation des données d'état-civil**

Une fois les données d'état-civil saisies, l'opérateur doit valider le formulaire pour passer à l'acquisition suivante.
Pour valider le formulaire, l'opérateur doit cliquer sur le bouton de validation « V », 66, indiqué par une flèche verte sur un fond bleu par exemple. Cette action valide les données saisies (manuellement ou automatiquement), et les sauvegarde en mémoire. Avant de passer à l'acquisition suivante, le marqueur « V » s'affiche devant le nom de l'étape de saisie de l'état-civil.
Pendant la sauvegarde, une petite fenêtre apparait brièvement en bas à droite de l'application avec le message « sauvegarde des données ».

**Cas d'erreur de la validation des données d'état-civil**

La validation de l'état-civil vérifie les données saisies. Les vérifications effectuées sont spécifiques à chaque champ.

Si un champ est manquant ou invalide, cela sera indiqué, par exemple, par une icône croix blanche sur fond rouge clignotante.

Une indisponibilité du lecteur de bande MRZ se manifestera par un message d'erreur (parfois clignotant) dans le coin inférieur bas de l'application.

- Dans le cas où le message d'erreur « *Lecteur MRZ non connecté* » s'affiche, l'opérateur va vérifier les points suivants :

    1. Vérifier que le lecteur est sous-tension (sa prise d'alimentation est bien reliée au secteur)
    2. Vérifier que le lecteur est allumé (une lumière indique que l'appareil est allumé)
    3. Vérifier que le lecteur est branché au PC (le câble USB de l'appareil doit être connecté au PC)

- Dans le cas où le message d'erreur « *Erreur du lecteur MRZ* » s'affiche, l'opérateur va vérifier les points suivants :

    1. Vérifier que le lecteur MRZ connecté au PC est celui qui est configuré pour l'application
    2. Quitter l'application et vérifier le bon fonctionnement du lecteur avec l'application de test du lecteur

- Dans le cas où le message d'erreur « *Initialisation du lecteur MRZ échouée* » s'affiche, l'opérateur doit vérifier les points suivants :

    1. Vérifier que le lecteur MRZ connecté au PC est celui qui est configuré pour l'application
    2. Quitter l'application et vérifier le bon fonctionnement du lecteur avec l'application de test du lecteur.

Au cours de l'acquisition des données d'état-civil du demandeur, différents messages liés au matériel peuvent s'afficher.

### Acquisition de la photographie

Cette fonction permet à l'opérateur d'acquérir la photographie du demandeur. Les moyens d'acquisition mis en oeuvre dans cette étape aident à capturer une photographie de qualité acceptable pour un document d'identité, selon les recommandations de la norme ICAO ISO/IEC CD 19794-5 Part 5 : Face Image Data.

La photo peut être acquise, par exemple, de deux manières différentes :

- En direct ou « live » : l'opérateur prend la photographie du demandeur en temps réel, avec une caméra numérique.
- Scan : l'opérateur numérise avec un scanneur la photographie fournie par le demandeur.

L'étape d'acquisition de la photographie permet de passer de l'un à l'autre des deux modes, grâce à un bouton situé au dessus du bouton de validation de l'écran du PC. L'icône de ce bouton change selon le mode d'acquisition. En mode « Live » l'icône est un scanneur, et en mode « Scan » l'icône est un appareil photo.

Il est possible d'indiquer un fonctionnement par défaut pour le système. Par exemple, la caméra est initialisée au chargement de l'écran, et la vidéo live s'affiche automatiquement dans le cadre du PC. Si la caméra s'est correctement initialisée, le message « Caméra initialisée » est affichée en bas à gauche de l'écran de l'application. Pour prendre la photo à l'aide d'un scanner, cliquer sur le bouton correspondant sur l'écran.

### Prise de la photographie avec une caméra

Une fois que l'écran d'acquisition de la photographie est affiché, la la vidéo en directe prête, l'opérateur est prêt pour prendre la photographie du demandeur.

Les étapes ci-après décrivent un exemple de cas nominal d'une acquisition de la photographie.

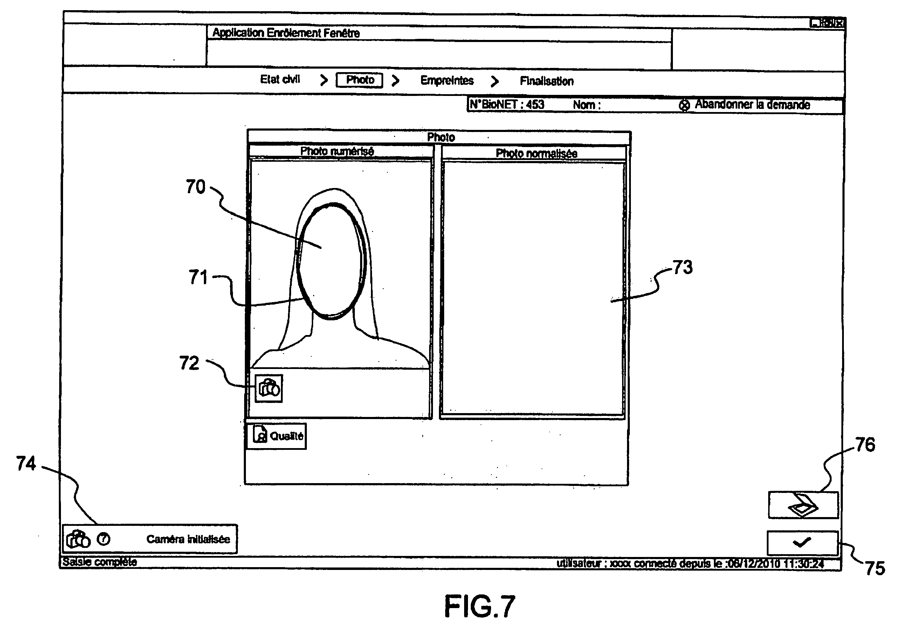

1) Cadrer le demandeur de sorte à avoir son visage 70 dans un ovale 71 par exemple comme illustré sur la figure 7, Si nécessaire, l'opérateur doit proposer au demandeur de centrer son visage dans l'ovale. Bien que le demandeur soit aidé de l'écran de retour, l'opérateur a tout de même un rôle de guide dans cette phase d'acquisition. L'opérateur peut, par exemple, proposer au demandeur de se baisser ou se redresser s'il est trop bas ou trop haut, ou de changer l'inclinaison de son visage : le demandeur ne doit regarder ni en haut, ni en bas, ni sur les côtés, et ne doit pencher la tête ni en avant, ni en arrière, ni sur les côtés.

2) Quand le centrage est correct et que le demandeur satisfait aux exigences de l'ICAO, l'opérateur avertit le demandeur que la capture est imminente, puis clique sur le bouton 72 correspondant sur l'écran du PC.

L'écran de retour avertit le Demandeur que l'acquisition est en cours. L'écran de retour avertit le Demandeur que la photographie a été acquise et est en cours de traitement par l'application.

3) A partir de la photographie acquise, l'application détecte les yeux et le visage du demandeur ; une fois détectés, les yeux apparaissent sous la forme de croix rouges. Si les yeux ne sont pas détectés correctement il va y avoir un recadrage des yeux.

4) L'application effectue alors un recadrage du visage selon les recommandations de l'ICAO ; l'image recadrée est affichée 73 dans le cadre [Image recadrée] à droite au niveau de l'écran du PC, et sur l'écran de retour.

5) L'application effectue ensuite un contrôle qualité automatique.

Le contrôle qualité automatique est effectué sur l'image recadrée.

Le résultat du contrôle qualité automatique est indiqué par un message en bas de l'image recadrée, et par un marqueur sous l'image d'origine.

- Marqueur « V » indique un résultat OK,
- Marqueur ! indique un résultat KO.

L'opération finale consiste à statuer sur la validité de la photographie. Si l'opérateur est en accord avec le contrôle qualité automatique et juge que la photographie est acceptable (c'est-à-dire qu'elle est conforme aux recommandations de l'ICAO), alors il peut la sauvegarder en cliquant sur le bouton « V » 75 de l'écran du PC. Cela sauvegardera la photographie recadrée et passera à l'étape suivante de la collecte des données du demandeur. Pendant la sauvegarde, une petite fenêtre apparait brièvement en bas à droite de l'application affichant le message « sauvegarde des données ».

6) L'opération finale consiste à statuer sur la validité de la photographie. Si l'opérateur est en accord avec la qualité de la photographie, alors il sauvegarde la photographie et passer à l'étape suivante de la collecte des données biométriques du demandeur.

L'application est par exemple adaptée à exécuter une mesure en continue d'une zone fixe de l'image, et d'adapter automatiquement et en temps réel de la luminosité de l'image photo de l'individu, garantissant ainsi la stabilité de la luminosité des images enregistrées indépendamment des caractéristiques physiques d'un individu et quelque soit les conditions environnantes, fluctuation de la lumière du jour.

**Reposition manuelle des yeux**

Lorsque la photographie a été prise, le système de traitement détecte les yeux et le visage du sujet. Si la détection automatique des yeux échoue ou est incorrecte, l'opérateur peut les repositionner manuellement, en modifiant les coordonnées des croix rouges symbolisant l'emplacement des yeux.

- Pour modifier l'oeil à gauche, il doit cliquer à l'emplacement adéquat avec le bouton gauche de la souris,
- Pour modifier l'oeil à droite, il doit cliquer à l'emplacement adéquat avec le bouton droit de la souris

Lorsque l'opérateur repositionne un oeil, l'application effectue un zoom sur l'image. Ce zoom n'est affiché que lorsqu'un des boutons de la souris est enfoncé. Un appui court sur un des boutons affichera brièvement le zoom, tandis qu'un appui plus long affichera un zoom sur une durée plus longue.

- L'opérateur est alerté d'un contrôle qualité réussi lorsque le message « Contrôle qualité OK » est affiché en bleu sous l'image recadrée.
- L'opérateur est alerté d'un contrôle qualité en échec lorsque le message « Contrôle qualité KO » est affiché en rouge sous l'image recadrée.

Les indicateurs du résultat contrôle automatique s'affichent à l'écran. Une icône et la fonction associée peuvent être consultés à l'écran du PC. Pour cela, au niveau de l'affichage du PC, une icône « Qualité » apparaît. Le résultat du test qualité apparaît à droite de son libellé, par exemple. Le résultat est signalé en vert lorsqu'il est considéré comme bon, c'est-à-dire au-dessus de son seuil d'acceptation. Ce score est en rouge lorsqu'il est considéré mauvais, c'est-à-dire en dessous de son seuil d'acceptation. Lorsque le contrôle qualité est mauvais, l'opérateur peut être conduit à reprendre une photographie.

**Acquisition de la photographie avec un scanneur**

Selon une variante de réalisation, l'opérateur peut lancer la capture de la photographie par un scanneur en cliquant sur un bouton 76 correspondant à l'écran.

**Numériser la photographie avec le scanneur**

Lorsque l'écran de numérisation de la photographie avec un scanneur est chargé sans erreur (le message « *Scanneur initialisé* » s'est affiché, l'opérateur est prêt à numériser la photographie du demandeur. L'acquisition de la photographie avec un scanneur se déroule, par exemple, en 3 étapes :

- Insertion du document dans le scanneur
- Numérisation du document,
- Recadrage et contrôle qualité de la photographie, ces fonctions sont les mêmes que dans le cas d'une prise de photo avec une caméra.

**Capture d'empreintes**

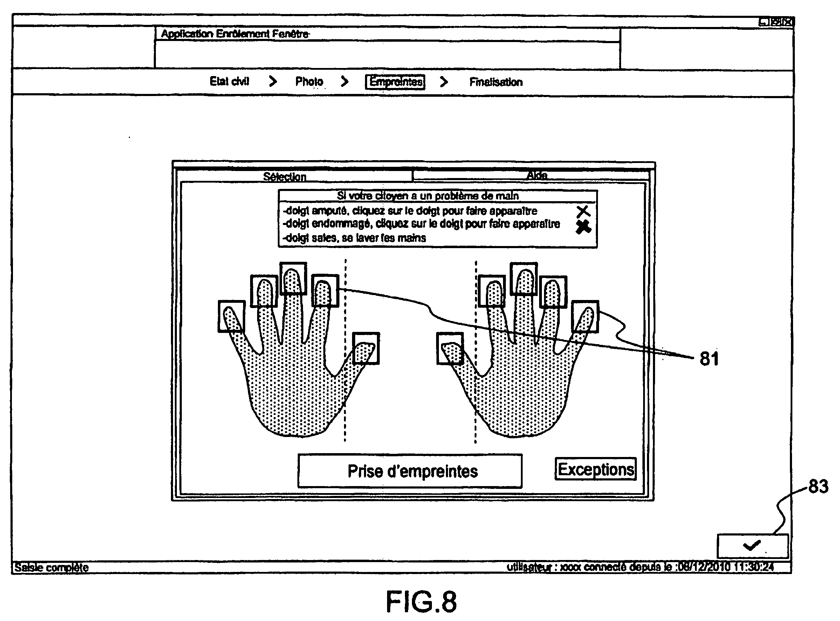

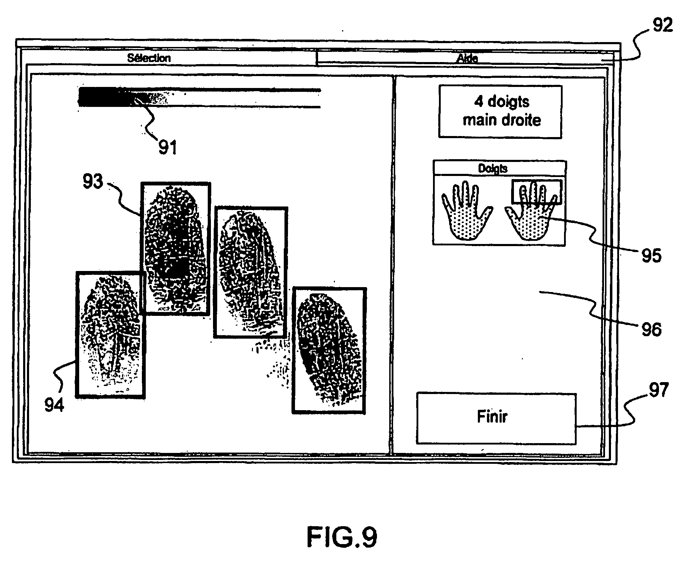

La fonction « capture d'empreintes » permet à l'opérateur d'acquérir les empreintes digitales du Demandeur. Les étapes qui suivent vont être décrites en relation avec les figures 8, 9.
Quand l'écran de capture est affiché, l'application initialise le capteur d'empreintes, ce qui peut prendre plusieurs secondes (~10s). Lorsque l'initialisation est terminée, la boite de message d'initialisation disparait. Deux mains bleues sont affichées, qui représentent les 2 mains du sujet posées à plat. Au bout de chaque doigt est dessiné un cadre 81 représentant l'empreinte digitale.
L'écran est séparé en 3 parties numérotées de 1 à 3, de droite à gauche : cela correspond à l'ordre d'acquisition des doigts :

- la main droite en 1$^{er}$,
- la main gauche en 2$^{nd}$,
- les deux pouces en 3$^{ème}$.

Il n'y a qu'une seule empreinte digitale par doigt. Par défaut, les cadres d'empreintes sont vides. Tous les cadres d'empreintes vides doivent être acquis.
Chaque empreinte est contrôlée spécifiquement selon sa nature (hormis les auriculaires). Voici quelques exemples non exhaustifs pour illustrer cela : _ les index sont plus importants que les autres doigts car ils seront insérés dans la puce du passeport, un contrôle avec une qualité plus sévère que sur les autres doigts sera effectué, en moyenne la surface d'un index étant plus petite que celle d'un pouce, le seuil d'acceptabilité de surface d'un index sera plus bas que celui d'un pouce. Le contrôle qualité individuel des doigts permet de se concentrer sur les doigts difficiles à acquérir (empreintes sur et sous-encrées, empreintes issues de doigts abîmés donc inutilisables, empreintes trop petites). Le but est de ne pas enregistrer de telles empreintes et de permettre leur ré-acquisition.
Lorsque les empreintes ont été correctement capturées, l'opérateur clique sur le bouton « V » 83 pour sauvegarder les données. Cela sauvegardera les données et passera à l'étape suivante du workflow. Pendant la sauvegarde, une petite fenêtre apparait brièvement « données sauvegardées ».
Si des empreintes n'ont pas la qualité suffisante requise, l'opérateur peut relancer la prise d'empreintes en cliquant sur le bouton [Relancer la prise d'empreintes complète] ;
Les points clés de l'acquisition des empreintes sont :

- La capture des empreintes digitales de la majeure partie de la population ciblée (quand les empreintes digitales sont disponibles), avec la gestion d'exception et des détections de fraude comme l'inversion manuelle ou la pose de deux fois le même doigt ;
- Le contrôle de la qualité des images acquises et affichage d'informations (à l'opérateur et au demandeur simultanément) pour obtenir la meilleure qualité finale ;
- La séquence automatisée, avec aide et conseil, pour faciliter l'acquisition ;
- L'optimisation du temps d'acquisition, sans aucun compromis quant à la qualité.

La séquence d'acquisition des 10 empreintes notée « 4-4-2 » est la plus couramment utilisée, car elle minimise le temps nécessaire tout en garantissant une bonne qualité d'image. Elle consiste en l'acquisition simultanée des quatre doigts de la main droite (à l'exception du pouce), des quatre doigts de la main gauche (à l'exception du pouce) et des deux pouces. Cette séquence est illustrée avec la présentation des écrans opérateur et demandeur.
A tout instant de l'acquisition, l'opérateur peut choisir de basculer en mode de capture mono-doigt. Cette capacité est particulièrement utile lorsque : les doigts présentent des défauts de naissance ou suite à un accident de la vie (doigts collés, malformation des doigts, ...) ; il y a une mauvaise qualité de doigts (travailleurs manuels, chirurgie, doigts brûlés, ...).

Cette capture mono-doigt utilise le même matériel et le même logiciel et les mêmes traitements sont appliqués.

Chaque image est traitée de sorte à obtenir, pour chacun des dix doigts, une image compressée de bonne qualité.

Les « maillons » qui composent ce dispositif sont de natures matérielle, algorithmique et logicielle. Des traitements algorithmiques sont nécessaires et appliqués sur les images multi doigts appelées *slaps* : un *slap* peut donc être composé de 1 à 4 doigts.

Le maillon ergonomie représente l'ergonomie logicielle qui adresse deux sujets : l'Interface Homme Machine (IHM) de l'application opérateur et les animations affichées sur l'écran de retour pour le demandeur. Cela permet aux acteurs que sont l'opérateur et le demandeur d'optimiser la pose des doigts en visualisant en temps réel le flux d'images vidéo.

Le maillon capteur symbolise le niveau de qualité offert par le capteur multi doigts. Ce niveau est assuré avec la sélection d'un capteur multi doigts certifié garantissant une qualité d'image fidèle aux empreintes digitales saisies en vue d'une application de type identitaire. Les propriétés de ce capteur permettent de minimiser le taux d'échec à l'enrôlement.

Le maillon « contrôle qualité slaps » caractérise deux fonctionnalités algorithmiques : la capture automatique des images multi doigts (slaps) et la visualisation par l'opérateur et le demandeur du niveau de qualité de la pose des doigts.

Le maillon « segmentation automatique » représente le traitement algorithmique d'extraction automatique des images d'empreintes à partir des slaps puis leur étiquetage (Pouce gauche, Index Gauche, etc.). De plus, il contrôle la nature des empreintes par rapport à celles attendues : détection des inversions de mains et contrôle du nombre de doigts posés.

Le maillon « contrôle qualité empreintes et sélection des meilleures images » caractérise le contrôle de qualité effectué au niveau de chaque doigt. Ce contrôle qualité est complémentaire à celui effectué sur les slaps. Il garantit également la sélection de la meilleure image de chaque doigt parmi celles acquises dans le flux vidéo. Il consiste notamment à attribuer une note qualité comprise entre 0 et 100 à une image d'empreinte digitale. Plus la qualité de l'image est élevée, c'est-à-dire, plus l'image contient des informations utiles aux algorithmes de traitement de données, plus le score de qualité est important.

Le maillon « compression des images » représente le traitement destiné à réduire la quantité de données manipulées sans dégrader la qualité « utile » des empreintes digitales.

## Contrôle qualité

Le logiciel mis en oeuvre par l'invention intègre un contrôle qualité pour les slaps et pour chaque doigt. Ces contrôles en temps réel permettent la sélection de la meilleure image de chaque doigt, de façon continue durant le temps d'acquisition. Chaque image est sélectionnée indépendamment des autres.

## Positionnement

La position des doigts doit couvrir un maximum de la surface du capteur. Des barres rouges sont affichées sur le côté approprié en cas de défaut de positionnement

## Nombre de doigts

Ce contrôle vérifie que la séquence choisie (« 4-4-2 » typiquement est respectée), i.e. que le nombre de doigts est celui attendu; il est adaptatif en fonction de l'étape en cours. En cas de défaut, un message est affiché à l'opérateur.

## Qualité de l'information

Le rapport signal à bruit du slap doit être optimal dans les régions d'intérêt. Il est affiché par l'échelle de couleur en haut de l'écran, ainsi que sur les boites de couleur entourant chaque empreinte.

## Surface

La surface des empreintes au sein de l'image multi doigts doit être suffisante. Cette information est combinée avec la précédente sur l'échelle en haut de l'écran, ainsi que sur les boites de couleur entourant chaque empreinte. Tous ces critères sont combinés pour calculer un score-qualité unique pour chaque doigt, sur une échelle non linéaire de 0 à 100 (plus précise que ce qu'exige la norme NIST). Chaque empreinte est contrôlée spécifiquement à sa nature. Des seuils différents peuvent être définis pour chaque doigt et pour chaque critère, en fonction des exigences.

Parallèlement à la compression des images, une étape d'encodage est réalisée afin de générer une vue réduite des caractéristiques de l'empreinte digitales, c'est-à-dire une liste de ses minuties appelée gabarit. Les minuties enregistrées sont les fins de lignes de crêtes et les bifurcations. Ici encore le format de ce gabarit est conforme et édicté par la norme ISO 19794-2. En complément de ces minuties, si l'agence ANTS le souhaite, il est possible de générer les informations de comptage des lignes de crêtes (ou en anglo-saxon ridge count) qui sont optionnelles dans la norme.

La solution sélectionne automatiquement et en temps réel la meilleure image obtenue pour chaque doigt, parmi celles acquises et traitées dans le flux vidéo de la séquence d'acquisition.

A la fin de la séquence d'acquisition, c'est à dire une fois les images des dix doigts sélectionnées un module approprié au niveau du poste de travail procède à la vérification de l'unicité de chaque image sélectionnée. Ceci permet de contrôler que le demandeur n'a pas posé plusieurs fois le même doigt. Dans le cas d'un résultat positif (au moins 2 images issues du même doigt), l'acquisition sera annulée et doit être réalisée à nouveau. La vigilance de l'opérateur est alors indispensable, il en est informé.

**Segmentation**

La segmentation est appliquée en temps réel sur chaque image multi-doigts :

Extraction de la première phalange de chaque doigt au sein de l'image
Gestion des cas d'exception déclarés (doigts abimés ou absents)
Une fois les étapes précédentes réalisées, les images d'empreintes digitales obtenues peuvent représenter plus de 1 Mo de données (en fonction du nombre de doigts acquis). Pour faciliter leur stockage et leur transfert au travers le réseau (vers le système de gestion de l'identité qui va les exploiter), ces images sont compressées.

L'ergonomie des Interfaces Homme Machine a été conçue pour faciliter la compréhension des processus, aussi bien au niveau de l'opérateur que du demandeur. L'application exploite deux écrans simultanément, l'un tourné vers l'opérateur et l'autre vers le demandeur. Chacun d'eux affiche des informations spécialisées par type d'acteur :

Pour les opérateurs : une IHM de capture avec un minimum d'actions à réaliser et un guide de bonnes pratiques accessible en ligne,
Pour les demandeurs: une série d'animations graphiques et la visualisation du flux sur l'écran de retour.

Ceci a un triple intérêt :

Faciliter l'acceptation du demandeur: il devient acteur et témoin de la capture de ses empreintes ;
Accélérer les phases d'enrôlement : la pose des doigts devient intuitive;
Faciliter la communication opérateur - demandeur: un certain nombre d'informations sont partagées.

La figure 9 schématise un exemple d'écran montrant les le résultat de prise d'empreintes.

Par exemple, sur la figure 9, on a représenté une zone 91 d'indicateur temps réel de la qualité de l'image lors d'une opération de prise d'empreintes, un onglet 92 d'aide en ligne, une zone 93 de flux vidéo en temps réel, un indicateur 94 de qualité de l'empreinte, une étape 95 de la séquence, une zone 96 de message d'alerte et une zone 97 d'arrêt de la séquence automatique.

Pour illustrer le principe mis en oeuvre dans le procédé selon l'invention, par exemple dans le cas où l'on souhaite contrôler qu'une main droite n'est pas posée sur le lecteur à la place d'une main gauche ou qu'il y a 4 doigts posés au lieu de 3, le procédé peut dérouler les étapes suivantes :

A On vérifie dans un premier temps si une main est posée ou non sur le capteur.
B On applique ensuite un algorithme de segmentation sur l'image complète issue du capteur : c'est-à-dire qu'un *algorithme va déterminer la position de n rectangles* qui encadrent au plus proche la première phalange de chacun des n doigts.
Selon une variante de réalisation, il est possible d'ajouter une étape de vérification du nombre de doigts posés sur le capteur : est-ce que le nombre de doigts vus sur le capteur est identique au nombre de doigts valides déclarés par l'opérateur au préalable. Il est aussi possible d'ajouter la possibilité de ne pas avoir une unique orientation pour l'ensemble des doigts s'il s'agit de l'acquisition de 2 pouces. Ainsi lors d'une acquisition classique, tous les doigts doivent être parallèles pour être acceptés par la segmentation. Mais lors d'une acquisition 2 pouces, cet algorithme a la possibilité de chercher 2 orientations indépendantes pour chacun des 2 doigts : 2 pouces non parallèles seront ainsi acceptés par l'algorithme de segmentation.

C On contrôle ensuite la vraisemblance du résultat de cette segmentation, en mettant en oeuvre, par exemple, les étapes suivantes

1. L'orientation globale de la main est-elle cohérente ? Angle compris entre - pi/4 et pi/4 ;

2. N'y-a-t-il pas 2 doigts dans le même rectangle ? Pas de présence de colonne de pixels blancs dans l'image contenue dans le rectangle ;

3. Les dimensions des rectangles relativement l'une à l'autre sont-elles cohérentes? Les dimensions des n rectangles sont elles similaires à 10% près ;

4. Les dimensions des rectangles sont-elles cohérentes de façon absolue ? On compare les dimensions des n rectangles à un intervalle de dimensions empiriques observées. Cet intervalle autorisé est différent pour les pouces que pour les autres doigts.

5. Les positions des rectangles dans l'image globale relativement l'une à l'autre sont elles cohérentes ? Les orientations de ces rectangles sont similaires avec une marge de 10%, l'ordonnée du haut du rectangle i est similaire aux autres rectangles sauf pour petit doigt, le rectangle dont le centre est le plus bas correspond il bien au petit doigt.

6. Les doigts manquants, c'est-à-dire, amputés ou impossibles à acquérir sont-ils bien là où l'opérateur les a déclarés ? Si un doigt manquant est encadré par 2 doigts présents, donc absence de l'index ou du majeur, la distance entre ces 2 doigts présents doit être supérieure à 150% de la distance entre 2 doigts présents contigus. Si pas de doigts manquants, la distance entre le rectangle i et le rectangle i+1 doit être similaire quelque soit i avec une marge de 10% ;

7. Détection de l'inversion main gauche / main droite, calcul de l'angle de la droite passant par les 4 doigts par une régression linéaire. Cet angle doit être compris dans un intervalle d'angles obtenu empiriquement pour la main gauche ou main droite selon les cas ;

8. Détection de doigts en bord de capteur, comparaison de l'abscisse la plus extrême de l'ensemble des rectangles. Cette abscisse ne doit pas se situer à moins de 32 pixels du bord de l'image ;

Si les points 1 à 5 sont en erreur, le résultat de la segmentation est rejeté. Aucun rectangle de segmentation n'est affiché à l'écran et les résultats la segmentation ne seront pas pris en compte pour cette image.

Si les points 6 à 8 sont en erreur, on signale le problème sur l'écran opérateur et l'écran sujet, affichage d'un message approprié et dans le cas « doigts au bord », un dégradé rouge est affiché sur le bord concerné ;

Affichage de la qualité de chaque doigt et qualité globale de la main au fil de l'eau sur l'écran opérateur et l'écran sujet

On utilise le score qualité sur chacun des doigts.

Le score qualité globale de la main est, par exemple, déterminé par la formule :

$$\text{Score\_qualite(main)} = \min(\text{ score\_qualite(doigt n°i) })$$

En cas de problème détecté lors de l'acquisition, une aide claire est affichée sur l'écran opérateur et/ou sur l'écran sujet (exemple : affichage d'un dégradé rouge si un doigt est posé en bord de capteur).

Détermination automatique de la fin de l'acquisition en fonction d'un compromis vitesse d'acquisition en fonction de la qualité d'acquisition.

L'adaptation du temps acquisition en fonction de la qualité est, par exemple, réalisée de la manière décrite ci-après.

Lors de la pose de la main sur le capteur, un compte à rebours est déclenché : l'acquisition se termine automatiquement lorsque ce compte à rebours arrive à 0.

La valeur de ce compte à rebours est fixée à une valeur prédéterminée qui est fonction de l'état de qualité globale précitée de la main (excellent, bon, moyen ou médiocre). Si cet état évolue dans le temps (passage d'un état médiocre à excellent par exemple), la valeur du compte à rebours est fixée à la nouvelle valeur prédéterminée correspondante uniquement si cela implique une diminution du compte à rebours (donc un raccourcissement de la durée d'acquisition).

Les données sont stockées temporairement sur les postes de travail d'un opérateur de façon sécurisée, interdisant leur lecture par un tiers non autorisé ou leur modification. Par exemple, les données stockées sont chiffrées partiellement ou totalement pour empêcher la lecture de la donnée « utile ». Cependant, les données sont lisibles pour être envoyées vers le site d'exploitation. Seul le site d'exploitation dispose des clefs nécessaires pour déchiffrer les données transmises. Le mécanisme d'envoi et de transmission sécurisée vérifie si des fichiers sont à transmettre et les envoie le cas échéant. Il transmet la donnée chiffrée.

Un processus automatique non visible par l'opérateur, vérifie régulièrement si des dossiers sont à transférer au système central de gestion de l'identité et si un réseau autorisé est disponible. Dans ce cas, les dossier sont automatiquement transférés puis, une fois réceptionnés, supprimés du stockage local. Ce mécanisme applicatif permet aux postes de travail d'enrôler les demandeurs indépendamment de la disponibilité du réseau.

Le mode déconnecté est déclenché lorsque l'une des situations suivantes se produit :

*Perte de connexion du réseau (câble réseau débranché, routeur en panne, etc.) ;

*Délai de réponse dépassé par le système de gestion de l'identité récepteur des dossiers (application centrale en panne, serveur arrêté, etc.);

*Aucun réseau n'est disponible.

Le fonctionnement des stations fixes en mode déconnecté dépend de sa connectivité au réseau

* Coupures intermittentes, mais non définitives du réseau : dans cette situation, tous les dossiers électroniques constitués sont stockés localement en attendant le rétablissement du réseau. Lorsque la connexion est rétablie, les données sont automatiquement transmises vers le système central.

* Réseau absent : la station fixe est configurée pour fonctionner sans le réseau. La transmission des données ne peut plus se faire en ligne, mais au moyen de supports matériels de type CD-ROM ou clé USB.

Les stations mobiles fonctionnent comme les stations fixes, avec un réseau indisponible : les données sont stockées sur la station mobile tant qu'elle n'est pas connectée à un réseau ou tant qu'elles n'ont pas été enregistrées sur un média amovible. Ce mode de fonctionnement est intéressant lorsque les stations mobiles sont utilisées dans des zones non connectées et rapportées par intermittence dans un site disposant du réseau.

Les données sont échangées entre le poste et le système de gestion de l'identité par Internet ou par un réseau privé. La sécurité de la communication repose sur le protocole SSL comme il est représenté à la figure 1C. Ce dernier permet d'assurer la confidentialité des données échangées au niveau de la couche réseau en plus de la couche applicative décrite précédemment. L'établissement de la liaison sécurisée se fait par l'intermédiaire d'une authentification mutuelle entre un certificat d'authentification contenu dans le poste (ou dans la carte de l'opérateur) et le certificat du serveur.

**Validation de la demande et impression du récépissé**

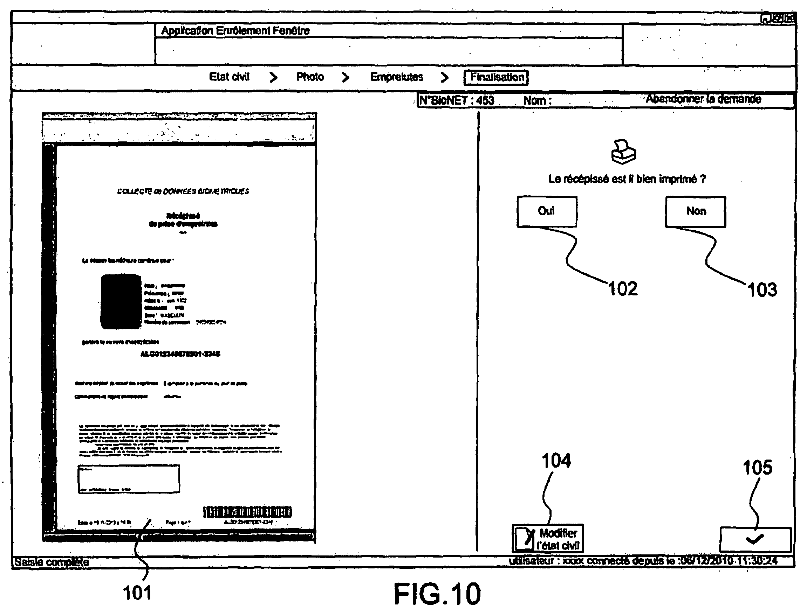

La figure 10 schématise un écran sur lequel est affiché un récépissé de prise d'empreintes. 101. Cette fonction permet à l'opérateur:

1) D'imprimer le récépissé de l'acquisition des données du demandeur, 102, ou de refuser 103 en cas d'erreurs,

2) De valider la totalité de l'acquisition des données du demandeur, 105,

3) De modifier l'état-civil du demandeur, 104.

Une demande peut être finalisée uniquement quand toutes ses données ont été acquises.

Quand une demande est finalisée, il ne peut plus y avoir de modifications de ses données.

Au chargement de cet écran, l'application génère le récépissé de la demande, affiché sur la partie gauche. Les actions disponibles sont affichées sur la partie droite de l'écran.

La validation de la demande passe par les étapes suivantes :

1) impression du récépissé,

2) validation de la bonne impression du récépissé par l'opérateur,

3) validation de la demande par l'opérateur.

La validation de la demande n'est accessible que lorsque les 2 premiers points sont satisfaits.

**Imprimer le récépissé**

Après la génération du récépissé, l'opérateur doit cliquer sur le bouton imprimante. Le bouton d'impression lance une impression du récépissé. Ce bouton reste disponible jusqu'à ce que la demande soit validée ; l'opérateur peut donc faire autant d'impressions qu'il est nécessaire.

**Valider l'impression du récépissé**

Après l'impression du récépissé, l'opérateur doit valider que celui-ci s'est correctement imprimé.

L'impossibilité d'imprimer le récépissé est une raison d'abandon de la demande.

Les boutons de validation de l'impression deviennent accessibles lorsqu'au moins une impression a été demandée.

L'opérateur doit répondre par « *Oui* » ou par « *Non* ».

- Si le récépissé est correctement imprimé, l'opérateur doit répondre « *Oui* ». Le bouton de validation de la demande devient alors accessible et l'opérateur peut passer à la validation de la demande.

Si le récépissé ne s'est pas (ou mal) imprimé, l'opérateur doit d'abord tenter de résoudre le problème d'impression. Dans le cas où l'impression du récépissé est impossible, l'opérateur doit répondre « *Non* ». Le message ci-dessous est alors affiché à l'opérateur

**Description du processus d'acquisition des données issues de la caméra**

Le capteur est configuré pour délivrer un flux vidéo suffisant, par exemple de 1 Mpixels, afin d'assurer la fluidité à l'affichage à l'écran du PC au travers le la liaison USB qui le relie au PC. Une adaptation automatique de la luminosité est effectuée par la mesure en temps réelle sur une zone prédéfinie. Cette zone est paramétrable, au travers d'un fichier de configuration « camera » par exemple comme il sera décrit ci-après. Elle peut couvrir une surface réduite jusqu'à la totalité de l'image, en fonction du niveau de sensibilité souhaité. Par exemple, on utilise une fonction automatique de la caméra avec une consigne de luminosité. Sur un fond gris, cette consigne est égale au niveau de gris. Ceci permet, notamment d'assurer, une homogénéité des photos produites (fond gris).

La phase d'acquisition démarre par l'appui sur un bouton d'acquisition activé par un opérateur. Le capteur est basculé en mode dit résolution totale » de 5 Mpixels, par exemple afin de permettre l'acquisition d'une image avec un maximum de résolution. Le capteur est alors reconfiguré par la modification du temps d'exposition à 150ms, par exemple. Un délai d'environ 500ms est appliqué avant de lancer la phase suivante, qui correspond à la temporisation de stabilisation du capteur.

A l'issue du basculement, une image est enregistrée dans la mémoire du PC. Cette image originale sera utilisée pour effectuer les opérations de traitements qui suivront.

Au niveau de l'affichage, l'image originale est par exemple affichée dans la partie gauche de l'interface machine.

Il est possible de mettre en oeuvre différents post traitements afin d'améliorer le rendu et optimiser la phase de contrôle qualité automatique. Ces opérations sont par exemple effectuées par une application désignée « composant photo » du système selon l'invention.

Au niveau de « post-traitement, il est possible d'adapter l'image afin d'optimiser la phase contrôle qualité.

Par exemple, un premier post-traitement consiste à atténuer des zones brillantes de visage. Ce traitement agit, notamment, sur les valeurs de contraste, de saturation et de gamma (luminosité) de l'image enregistrée.

Deux niveaux de traitement sont applicables : faible et moyen par exemple.

Un deuxième post-traitement permet d'ajuster les composantes RVB (....) de l'image afin d'obtenir un fond gris sans dominante de couleur. Il est possible d'utiliser deux types de traitements :

- Equilibrage simple : Il s'agit du nivellement des valeurs de composante RVB afin d'uniformiser le gris, en déterminant la valeur moyenne de ces composantes, mesurée sur une zone fixe du fond de l'image.
- Equilibrage + Ajustement : il s'agit d'un équilibrage simple suivi d'un ajustement des valeurs de chaque pixel de l'image en fonction du delta entre la valeur moyenne et une valeur de consigne, définie dans le fichier de configuration du « Composant Photo ».

Au niveau de l'affichage, l'image traitée sera par exemple affichée dans la partie gauche de l'écran du PC.

L'étape suivante réalisée par l'opérateur va consister à identifier la position des yeux dans l'image, par un logiciel connu de l'Homme du métier. Puis on va recadrer l'image pour la centrer sur le visage.

L'étape suivante va consister en une réduction de la taille initiale de l'image recadrée stockée en mémoire (taille entre 600 Ko et 900 Ko) vers une taille d'environ 300Ko une fois compressée. Le format d'image utilisé est par exemple de type JPEG. Cette opération peut s'effectuer en 2 étapes ; la première consiste à déterminer le taux de compression, par exemple en déterminant par dichotomie le meilleur taux de compression à appliquer pour obtenir la bonne taille d'image compressée. Puis lors d'une deuxième étape, lorsque le taux de compression est déterminé, la compression est effectuée sur la base de l'image recadrée puis stockée en mémoire du PC.

L'image traitée est par exemple affichée dans la partie droite de l'IHM. L'opération de contrôle de qualité d'image est effectuée par l'opérateur. Elle consiste, par exemple, à vérifier que l'image compressée répond aux critères de qualité requis par l'organisme qui établit le document d'identité. Suite au contrôle qualité, l'image est mise à disposition pour l'application d'enrôlement de l'utilisateur final.

La présente invention est constituée notamment d'un microordinateur associé à une station d'acquisition d'une photo et des empreintes, le système d'éclairage. La capture des données proposée dans cette offre permet de garantir la qualité de la photo « à la source » et ainsi de s'assurer qu'il n'y aura pas de refus dans le centre de production. Le logiciel mesurant la qualité de la photo est le même dans cette offre que dans le centre de production et ce logiciel sera utilisé avec les mêmes réglages. D'autre part, le fait d'effectuer la capture de la photo « en temps réel » permet d'obtenir directement une photo aux standards de qualité ICAO. Il n'y aura ainsi plus d'allers-retours entre le centre de production et les organismes habilités à établir des documents d'identité.

Le système et procédé selon l'invention offre une optimisation de la qualité et du temps de capture des empreintes digitales. Il offre une console biométrique intégrant le capteur d'empreinte multi doigts, l'écran de retour et l'utilisation du scanner pour réaliser différentes fonctionnalités requises pour établir des pièces d'identité.

**Revendications**

1. - Système permettant l'acquisition de données biométriques et biographiques d'un individu **caractérisé en ce qu'**il comporte en combinaison au moins les éléments suivants :

   • une station (1) dans laquelle sont intégrés au moins un des éléments suivants : un capteur d'empreintes biométriques (15), une caméra (10) pour une prise de vue dudit individu, un écran de retour (14), la station (1) comportant un bâti (11) recevant la caméra (10),
   • un portique (21) sur lequel est disposée la station (1), le portique comprenant des moyens d'éclairage adaptés pour assurer un éclairage respectant des conditions données d'acquisition des données biométriques,
   • les moyens d'éclairage étant composés d'un réflecteur métallique courbe (22) fixé à l'arrière et au sommet (23) du portique (21) par rapport à l'individu, d'un premier tube lumineux (24) supérieur placé sensiblement horizontalement, muni d'une protection, abaissé et orienté vers ledit réflecteur, un deuxième tube lumineux (25) disposé sensiblement horizontalement dans la partie inférieure du bâti (11), la puissance $P_2$ du deuxième tube lumineux étant inférieure à celle $P_1$ du premier tube lumineux,
   • ladite station étant reliée par une connectique à un microordinateur (19).

2. - Système selon la revendication 1 **caractérisé en ce que** les moyens d'éclairage sont adaptés pour garantir une acquisition de photos conformes aux contraintes de qualités relatives à la norme ICAO 9303 et ISO 19794-5.

3. - Système selon l'une des revendications 1 à 2 **caractérisé en ce qu'**il comporte des moyens de transmission sécurisée adaptés à l'envoi des données biographiques et biométriques acquises de manières anonymes et décorrélées entre le microordinateur (19) et un réseau N.

4. - Système selon l'une des revendications précédentes **caractérisé en ce que** le microordinateur (19) comprend un processeur adapté à exécuter au moins les modules applicatifs suivant :

   • un module pour acquérir les données biographiques d'un demandeur,
   • un module d'acquisition de données biométriques d'un demandeur, d'une photographie, d'empreintes,
   • le module d'acquisition d'une photographie étant adapté à afficher une photographie sur l'écran de retour (14), et à proposer à l'individu de cadrer son visage, de se positionner par rapport à la caméra, et à avertir l'individu que l'acquisition de sa photographie est en cours, puis à vérifier la qualité de la photographie et à valider la photographie dans le cas où la qualité de la photographie est acceptable,
   • un module d'acquisition et de contrôle de qualité de la prise d'empreintes, adapté à contrôler le lien entre une empreinte effectuée et un doigt, à contrôler en temps réel et en continue la qualité des images acquises pour chacun des doigts et à sélectionner en temps réel la meilleur image obtenue pour un doigt.

5. - Système selon la revendication 4 **caractérisé en ce qu'**il comporte un moyen adapté à contrôler la qualité de la prise d'empreintes, ledit moyen étant adapté à afficher sur l'écran de retour une échelle de couleur en fonction de la qualité de la prise d'empreintes.

6. - Système selon la revendication 1 **caractérisé en ce que** la caméra est intégrée dans le bâti, avec des capacités de réglage de la prise de vue externalisées, accessible depuis l'extérieur.

7. - Système selon la revendication 1 **caractérisé en ce que** le bâti (11) comporte une partie horizontale (11 A) et une partie verticale (11 B) et **en ce que** :

• Le capteur d'empreinte (15) est intégré dans la partie horizontale (11 A) du bati (11), en proximité du bord du bati,
• La caméra (10), est intégrée dans la partie verticale (11 B) du bati (11), à hauteur moyenne des yeux d'un individu en position assise,
• L'écran de retour (14) est intégré dans la partie verticale (11 B) du bati (11), face à l'individu, en dessous de la caméra (10) et au dessus du capteur de prise d'empreintes (15).

8. - Utilisation du système selon l'une des revendications 1 à 6 pour collecter l'ensemble des données biométriques et biographiques conformes à l'établissement de documents sécurisés, tels qu'une carte d'identité, un passeport, un permis de conduire.

**Patentansprüche**

1. System, das die Erfassung von biometrischen und biografischen Daten eines Individuums ermöglicht, **dadurch gekennzeichnet, dass** es in Kombination wenigstens die folgenden Elemente umfasst:

    • eine Station (1), in der wenigstens eines der folgenden Elemente integriert ist: ein biometrischer Fingerabdrucksensor (15), eine Kamera (10) zum Fotografieren des Individuums, einen Anzeigebildschirm (14), wobei die Station (1) ein die Kamera (10) aufnehmendes Gehäuse (11) umfasst,
    • einen Port (21), auf dem die Station (1) angeordnet ist, wobei der Port Beleuchtungsmittel zum Gewährleisten einer Beleuchtung unter Berücksichtigung von gegebenen Bedingungen zum Erfassen von biometrischen Daten beinhaltet,
    • wobei die Beleuchtungsmittel zusammengesetzt sind aus einem gekrümmten metallischen Reflektor (22), der an der Rückseite und an der Spitze (23) des Ports (21) mit Bezug auf das Individuum befestigt ist, einer im Wesentlichen horizontal platzierten ersten oberen Leuchtröhre (24), ausgestattet mit einem Schutz, abgesenkt und orientiert in Richtung des Reflektors, einer zweiten Leuchtröhre (25), die im Wesentlichen horizontal im unteren Teil des Gehäuses (11) angeordnet ist, wobei die Leistung $P_2$ der zweiten Leuchtröhre geringer ist als die Leistung $P_1$ der ersten Leuchtröhre,
    • wobei die Station über einen Verbinder mit einem Mikrocomputer (19) verbunden ist.

2. System nach Anspruch 1, **dadurch gekennzeichnet, dass** die Beleuchtungsmittel so ausgelegt sind, dass sie die Aufnahme von Fotos garantieren, die den Qualitätsauflagen gemäß den Normen ICAO 9303 und ISO 19794-5 entsprechen.

3. System nach einem der Ansprüche 1 bis 2, **dadurch gekennzeichnet, dass** es Mittel zum sicheren Übertragen umfasst, ausgelegt zum Senden der erfassten biografischen und biometrischen Daten auf anonyme und dekorrelierte Weise zwischen dem Mikrocomputer (19) und einem Netzwerk N.

4. System nach einem der vorherigen Ansprüche, **dadurch gekennzeichnet, dass** der Mikrocomputer (19) einen Prozessor umfasst, der zum Ausführen wenigstens der folgenden Anwendungsmodule ausgelegt ist:

    • ein Modul zum Erfassen der geografischen Daten eines Anforderers,
    • ein Modul zum Erfassen von biometrischen Daten eines Anforderers, einer Fotografie, von Fingerabdrücken,
    • wobei das Modul zum Erfassen eines Fotos so ausgelegt ist, dass es ein Foto auf dem Anzeigebildschirm (14) anzeigt und einem Individuum vorschlägt, das Gesicht auszurichten, sich in Bezug auf die Kamera zu positionieren, das Individuum warnt, dass die Aufnahme stattfindet, dann die Qualität des Fotos prüft und das Foto bestätigt, wenn die Qualität des Fotos akzeptabel ist,
    • ein Modul zum Erfassen und Regeln der Qualität der Fingerabdruckaufnahme, ausgelegt zum Steuern der Verbindung zwischen einem genommenen Abdruck und einem Finger, zum Steuern, in Echtzeit und kontinuierlich, der Qualität von Bildern, die für jeden der Finger aufgenommen wurden, und zum Wählen, in Echtzeit, des für einen Finger erhaltenen besten Bildes.

5. System nach Anspruch 4, **dadurch gekennzeichnet, dass** es ein Mittel zum Regeln der Qualität der Fingerabdruckaufnahme umfasst, wobei das Mittel so ausgelegt ist, dass es auf dem Bildschirm eine Farbskala in Abhängigkeit von der Qualität der vorgenommenen Fingerabdrücke anzeigt.

6. System nach Anspruch 1, **dadurch gekennzeichnet, dass** die Kamera in das Gehäuse integriert ist, wobei sich die Funktionen zum Regeln der Aufnahme außerhalb befinden und von außen zugängig sind.

7. System nach Anspruch 1, **dadurch gekennzeichnet, dass** das Gehäuse (11) einen horizontalen Teil (11A) und einen vertikalen Teil (11B) umfasst, und dadurch, dass:

• der Fingerabdrucksensor (15) im horizontalen Teil (11A) des Gehäuses (11) in der Nähe des Gehäuserandes integriert ist,
• die Kamera (11) im vertikalen Teil (11B) des Gehäuses (11) in mittlerer Höhe der Augen eines Individuums in Sitzposition integriert ist,
• der Anzeigebildschirm (14) im vertikalen Teil (11B) des Gehäuses (11), dem Individuum zugewandt, unterhalb der Kamera (10) und oberhalb des Fingerabdrucksensors (15) integriert ist.

8. Verwenden des Systems nach einem der Ansprüche 1 bis 6 zum Sammeln des Satzes von biometrischen und biografischen Daten entsprechend dem Erstellen von Sicherheitsdokumenten wie eine Identitätskarte, ein Pass, ein Führerschein.

## Claims

1. - A system allowing the acquisition of biometric and biographical data of an individual, **characterized in that** it comprises in combination at least the following elements:

• a station (1) into which at least one of the following elements are integrated: a sensor of biometric prints (15), a camera (10) for taking a picture of said individual, a feedback screen (14), the station (1) comprising a framework (11) receiving the camera (10),
• a gantry (21) on which the station (1) is disposed, the gantry comprising lighting means adapted for ensuring lighting complying with given conditions of acquisition of the biometric data,
• the lighting means being composed of a curved metallic reflector (22) fixed to the rear and to the apex (23) of the gantry (21) with respect to the individual, of a first upper light tube (24) placed substantially horizontally, furnished with a protection, which is lowered and oriented toward said reflector, a second light tube (25) disposed substantially horizontally in the lower part of the framework (11), the power $P_2$ of the second light tube being lower than that $P_1$ of the first light tube,
• said station being linked by a connection setup to a microcomputer (19).

2. - The system as claimed in claim 1, **characterized in that** the lighting means are adapted for guaranteeing an acquisition of photos in accordance with the quality constraints relating to the standard ICAO 9303 and ISO 19794-5.

3. - The system as claimed in one of claims 1 to 2, **characterized in that** it comprises means of secure transmission adapted for dispatching the biographical and biometric data, acquired in anonymous ways and decorrelated, between the microcomputer (19) and a network N.

4. - The system as claimed in one of the preceding claims, **characterized in that** the microcomputer (19) comprises a processor adapted for executing at least the following custom modules:

• a module for acquiring the biographical data of an applicant,
• a module for acquiring biometric data of an applicant, of a photograph, of prints,
• the module for acquiring a photograph being adapted for displaying a photograph on the feedback screen (14), and for prompting the individual to frame his face, to position himself with respect to the camera, and for warning the individual that the acquisition of his photograph is in progress, and then for verifying the quality of the photograph and for validating the photograph in the case where the quality of the photograph is acceptable,
• a module for acquiring and checking the quality of the taking of prints, adapted for checking the relationship between a print performed and a finger, for checking in real time and continuously the quality of the images acquired for each of the fingers and for selecting in real time the best image obtained for a finger.

5. - The system as claimed in claim 4, **characterized in that** it comprises means adapted for checking the quality of the taking of prints, said means being adapted for displaying on the feedback screen a color scale as a function of the quality of the taking of prints.

6. - The system as claimed in claim 1, **characterized in that** the camera is integrated into the framework, with externally sited capabilities for adjusting picture taking, accessible from outside.

7. - The system as claimed in claim 1, **characterized in that** the framework (11) comprises a horizontal part (11 A) and a vertical part (11 B) and **in that**:

> • The print sensor (15) is integrated into the horizontal part (11 A) of the framework (11), in proximity to the edge of the framework,
> • The camera (10), is integrated into the vertical part (11B) of the framework (11), at average height of the eyes of an individual in a seated position,
> • The feedback screen (14) is integrated into the vertical part (11 B) of the framework (11), facing the individual, below the camera (10) and above the print taking sensor (15).

8. - The use of the system as claimed in one of claims 1 to 6, to collect all the biometric and biographical data in accordance with the establishment of secure documents, such as an identity card, a passport, a driver's license.

**FIG.1A**

**FIG.1B**

**FIG.1C**

**FIG.2A**

**FIG.2B**

MODULE ENROLEMENT 30

Fonction Création de Demande 31

| Etat-civil | 32 |
| Photographie | 33 |
| Empreintes | 34 |
| Validation / Récépissé | 35 |

# FIG.3

1ère acquisition → En cours → Finalisation → Finalisé

Acquisitions suivantes

# FIG.4

Application Enrôlement Fenêtre

Etat civil  >  Photo  >  Empreintes  >  Finalisation

N°BIONET · 453        Nom ·                    Abandonner la demande

50

Demande de visa à destination de :

🏳 FRANCE ▾

51

52

Etat-civil

Nom

Prénom(s)

Date de naissance   ☐ / ☐ / ☐

Sexe              ⊙ Masculin       ○ Féminin

Nationalité        FRANCAISE ▾

N° de passeport    N° de passeport

Exemption des empreintes digitales
☐ Le demandeur est exempt de la capture de ces empreintes digitales

▾

« V »

✓

Saisie complète                                    utilisateur : xxxx connecté depuis le :08/12/2010 11:30:24

FIG.5

**FIG.6**

EP 2 817 677 B1

Application Enrôlement Fenêtre

Etat civil > [ Photo ] > Empreintes > Finalisation

N°BioNET : 453     Nom :          ⊗ Abandonner la demande

Photo

Photo numérisé                    Photo normalisée

70

71

72

73

Qualité

74

⊘  Caméra initialisée

76

75

Saisie complète                    utilisateur : xxxx connecté depuis le :06/12/2010 11:30:24

FIG.7

FIG.8

FIG.9

EP 2 817 677 B1

**FIG.10**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2009080708 A